# EUROPÄISCHE PATENTSCHRIFT

(11) **EP 3 266 739 B1**
(45) Veröffentlichungstag und Bekanntmachung des Hinweises auf die Patenterteilung: **05.12.2018**
(21) Anmeldenummer: 16400025.9
(22) Anmeldetag: 07.07.2016
(51) Int. Cl.: C01B 3/38, B01J 8/06

(54) **KORROSIONSGESCHÜTZTES REFORMERROHR MIT INTERNEM WÄRMEAUSTAUSCH**
CORROSION PROTECTED REFORMER TUBE WITH INTERNAL HEAT EXCHANGER
TUBE DE REFORMAGE PROTEGE CONTRE LA CORROSION COMPRENANT UN ECHANGEUR THERMIQUE INTERNE

(43) Veröffentlichungstag der Anmeldung: 10.01.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Hassler, Nathanael, 61267 Neu-Anspach (DE); Coscia, Antonio, 65589 Hadamar (DE)
(74) Vertreter: Dropsch, Holger

(56) Entgegenhaltungen:
- WO-A1-2013/068416
- DE-A1- 3 806 536
- US-A- 3 442 618
- HIGMAN C ED - BRENDENG E ET AL: "Synthesis gas processes for synfuels production", EUROGAS '90 : PROCEEDINGS, TAPIR PUBL, 28. Mai 1990 (1990-05-28), Seiten 1-10, XP002635271, ISBN: 978-82-519-1031-6 [gefunden am 1990-06-01]
- AGÃ 1/4 ERO A ET AL: "Metal Dusting Protective Coatings. A Literature Review", OXIDATION OF METALS, KLUWER ACADEMIC PUBLISHERS-PLENUM PUBLISHERS, NE, Bd. 76, Nr. 1 - 2, 20. März 2011 (2011-03-20), Seiten 23-42, XP019926006, ISSN: 1573-4889, DOI: 10.1007/S11085-011-9248-4

## Beschreibung

### Gebiet der Erfindung

Die Erfindung betrifft ein Reformerrohr zur Umwandlung kohlenwasserstoffhaltiger Einsatzstoffe, vorzugsweise Erdgas und leichte flüssige Kohlenwasserstoffe wie Naphtha, in ein Kohlenoxide und Wasserstoff enthaltendes Synthesegasprodukt. Das erfindungsgemäße Reformerrohr ermöglicht einen internen Wärmeaustausch zwischen dem Einsatzgas und dem zu Synthesegasprodukten teilumgesetzten Produktgas, wodurch sich Vorteile hinsichtlich des Energieverbrauchs bei der Herstellung von Synthesegas und der Wertprodukte Wasserstoff und Kohlenmonoxid ergeben. Die Erfindung betrifft ferner ein Verfahren zur Herstellung von Synthesegas durch Dampfreformierung kohlenwasserstoffhaltiger Einsatzstoffe unter Verwendung des erfindungsgemäßen Reformerrohres, sowie einen mit dem Reformerrohr ausgestatteten Reformerofen.

### Stand der Technik

Das Dokument WO 2013/068416 A1 offenbart ein Reformerrohr zur Herstellung von Synthesegas durch Dampfreformierung kohlenwasserstoffhaltiger Einsatzgase, bevorzugt Erdgas, bei dem ein oder mehrere gewendelte, innerhalb einer Katalysatorschüttung eines Reformierungskatalysators angeordnete Wärmetauscherrohre vorhanden sind, die auf einem Teil ihrer innerhalb der Katalysatorschüttung befindlichen Länge gewendelt sind und ansonsten gerade verlaufen, wobei der gerade verlaufende Anteil der Wärmetauscherrohre und/oder die Wendelsteigung des gewendelten Anteils innerhalb der Katalysatorschüttung geändert und somit Erfordernissen hinsichtlich des Druckverlustes und der Wärmeaustauscheigenschaften, aber auch hinsichtlich der Korrosionsbeständigkeit angepasst werden können.

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.

Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EUROGAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Nachteilig ist hierbei allerdings der höhere Druckverlust aufgrund der längeren Leitungsstrecke des Gases durch die wendelförmig ausgestalteten Wärmetauscherrohre. Ferner macht sich eine als "Metal Dusting" bezeichnete Korrosion stärker bemerkbar, die nachfolgend erläutert wird, da längere Abschnitte der Wärmetauscherrohre dem für die "Metal Dusting"-Korrosion relevanten Temperaturbereich ausgesetzt sind.

Wie in dem Fachaufsatz "Metal Dusting Protective Coatings. A Literature Review", A. Agüero et al., Oxid Met (2011) 76:23-42, gelehrt wird, ist Metal Dusting eine Art korrosiver Desintegration von Metallen und Legierungen in feine Partikel. Materialien, die anfällig für diese Form des Korrosionsangriffs sind, sind insbesondere Eisen, Nickel, Cobalt und ihre Legierungen. Metal Dusting tritt bei hohen Temperaturen von etwa 400 bis 800 °C und in Gasatmosphären auf, die insbesondere Kohlenmonoxid (CO) oder Kohlenwasserstoffe enthalten. Unter 400 °C ist zwar das thermodynamische Potenzial für die Metal Dusting-Reaktion hoch, aber ihre Reaktionsgeschwindigkeit niedrig. Über 800 °C ist das thermodynamische Potenzial für Metal Dusting so niedrig, dass es nicht in nennenswertem Ausmaß auftritt. Deswegen wird Metal Dusting häufig in Dampfreformierungsverfahren beobachtet, wobei alle Anlagenteile, insbesondere Ausrüstungsteile der Abhitzestrecke betroffen sind, die mit dem erzeugten Synthesegas im genannten Temperaturbereich in Berührung kommen.

Bei hohen Temperaturen neigen CO und Kohlenwasserstoffe dazu, auf Metall zu dissoziieren und hierdurch Kohlenstoff auf der Metalloberfläche abzulagern. Der Kohlenstoff wird dann an die feste Phase überführt und extrahiert die anfälligen Metalle aus ihrer homogenen festen Matrix, wodurch es zu Lochfraß und schließlich zum mechanischen Zusammenbruch der Materialien kommt. Dies führt zu hohen Wartungskosten und kann ernsthafte Sicherheitsprobleme verursachen, beispielsweise durch Bersten drucktragender Leitungen und Apparate und/oder den Austritt giftigen Kohlenmonoxids.

Das Auftreten von Metal Dusting kann durch die folgenden Maßnahmen verhindert oder zumindest verlangsamt werden:
a) Änderung der Prozessbedingungen des Grundverfahrens, insbesondere Temperatur und Druck,
b) gezielte Vergiftung der Metalloberflächen durch z. B. Schwefelverbindungen,
c) Änderung der Legierungszusammensetzung bzw. Verwendung korrosionsresistenter Werkstoffe,
d) Modifikation der Oberflächeneigenschaften durch chemische, thermische oder mechanische Behandlung,
e) Anbringen einer korrosionshemmenden Beschichtung auf der Legierungsoberfläche.

Dabei scheiden Maßnahmen unter a) oft aus, da das betrachtete Grundverfahren eben diese Temperaturen und Drücke erfordert. Dasselbe gilt für Maßnahme c), da die Verfahrensbedingungen des Grundverfahrens eine bestimmte Materialauswahl und somit Legierungszusammensetzung erfordern. Ferner ist die Wirksamkeit der Maßnahmen unter b) und d) oft zeitlich begrenzt.

Im Hinblick auf Maßnahme e) kommen dabei üblicherweise entweder Diffusionsbeschichtungen oder Überzüge bzw. Deckschichten zum Einsatz, die auf der auf der Bildung einer dünnen, stabilen, schützenden und haftenden Oxidzunderschicht, basierend auf den Elementen Aluminium, Chrom oder Silicium basieren. Derzeit werden am häufigsten Aluminium-Diffusionsbeschichtungen für den Oxidations- und Korrosionsschutz in der chemischen Industrie bei hohen Temperaturen eingesetzt.

Diffusionsbeschichtungen werden gebildet, wenn eine Legierung mit einem Metall oder einer Metallmischung bei einer Temperatur beschichtet wird, die hoch genug ist, um eine Eindiffusion des oder der Metalle in das Substrat zu ermöglichen. Daraus ergibt sich eine metallurgische Bindung mit dem Substratmaterial und die Beschichtung wird dann zu einem integralen Bestandteil des Substratmaterials. Als Nachteile ergeben sich hierbei der hohe Herstellungsaufwand und die begrenzte Lebensdauer von Diffusionsbeschichtungen, beispielsweise durch Verflüchtigung des Schutzmetalls oder Abrasion.

Auch eine Fertigung kompletter Anlagenteile, beispielsweise von Rohrleitungen, aus keramischen Werkstoffen bietet Schutz vor der Metal Dusting-Korrosion. Nachteilig ist allerdings hierbei die im Vergleich zu metallischen Werkstoffen geringere Druckbeständigkeit bzw. allgemein die geringere Formbarkeit und Elastizität.

### Beschreibung der Erfindung

Die Aufgabe der vorliegenden Erfindung besteht daher darin, ein Reformerrohr anzugeben, das günstige Eigenschaften bezüglich der Energierückgewinnung mittels internem Wärmeaustausch aufweist, bei dem aber gleichzeitig die Korrosionsanfälligkeit für die Metal Dusting-Korrosion minimiert ist.

Diese Aufgabe wird durch ein Reformerrohr mit den Merkmalen des Anspruchs 1 gelöst. Weitere Ausgestattungen der Erfindung ergeben sich aus den jeweiligen Unteransprüchen.

### Erfindungsgemäßes Reformerrohr:

Reformerrohr zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen, umfassend
(a) ein äußeres, drucktragendes Mantelrohr, wobei das Mantelrohr mittels eines Trennbodens in eine Reaktionskammer und eine Austrittskammer unterteilt wird, so dass in der Austrittskammer ein anderer, vorzugsweise geringerer, Druck als in der Reaktionskammer einstellbar ist und wobei die Reaktionskammer von außen beheizt wird,
(b) eine in der Reaktionskammer angeordnete Schüttung eines für die Dampfreformierung aktiven, festen Katalysators,
(b) einen im Bereich der Reaktionskammer angeordneten Eintritt für den den Einsatzstoff enthaltenden Einsatzgasstrom, wobei der Eintritt des Einsatzgasstroms in Fluidverbindung mit der Katalysatorschüttung steht,
(c) mindestens ein innerhalb der Reaktionskammer und innerhalb der Katalysatorschüttung angeordnetes Wärmetauscherrohr, dessen Eintrittsende in Fluidverbindung mit der Katalysatorschüttung steht und dessen Austrittsende in Fluidverbindung mit der Austrittskammer steht, wobei der Einsatzgasstrom nach Eintritt in die Reaktionskammer zunächst die Katalysatorschüttung und nachfolgend im Gegenstrom das Wärmetauscherrohr durchströmt und wobei das wärmetauscherrohr in einer Wärmeaustauschbeziehung mit der Katalysatorschüttung und dem durch sie strömenden Einsatzgasstrom steht,
(d) eine Sammelleitung für das Synthesegasprodukt, die mit der Austrittskammer in Fluidverbindung steht, dadurch gekennzeichnet, dass im Bereich der Austrittskammer
(e) das Austrittsende des Wärmetauscherrohrs durch den Trennboden durchgeführt wird und in ein im Inneren des Mantelrohrs angeordnetes Innenrohr einmündet, das in Fluidverbindung mit der Sammelleitung steht, so dass das Synthesegasprodukt von der Reaktionskammer über die Austrittskammer in die Sammelleitung gelangen kann,
(f) das Innenrohr mit einer Korrosionsschutzschicht ausgestattet ist oder aus einem korrosionsbeständigen Material besteht,
(g) zwischen der Innenwand des Mantelrohrs und der Außenwand des Innenrohrs eine gasdurchlässige thermische Isolierschicht angeordnet ist.

Die Erfindung betrifft auch einen Reformerofen, der mit dem erfindungsgemäßen Reformerrohr ausgestattet ist, sowie ein Verfahren zur Herstellung von Synthesegas durch katalytisches Dampfreformieren kohlenwasserstoffhaltiger Einsatzstoffe in dem erfindungsgemäßen Reformerrohr.

Unter Fluidverbindung zwischen zwei Bereichen des Reformerrohres wird dabei jegliche Art von Verbindung verstanden, die es ermöglicht, dass ein Fluid, beispielsweise der Einsatzgasstrom oder der Synthesegasproduktstrom, von dem einen zu dem anderen der beiden Bereiche strömen kann, unbeachtlich etwaiger zwischengeschalteter Bereiche oder Bauteile.

Mit Wärmeaustauschbeziehung ist die Möglichkeit des Wärmeaustauschs oder der Wärmeübertragung zwischen zwei Bereichen des Reformerrohres gemeint, wobei alle Mechanismen des Wärmeaustauschs oder der Wärmeübertragung wie Wärmeleitung; Wärmestrahlung oder konvektiver Wärmetransport zum Tragen kommen können.

Unter Dampfreformierungsbedingungen sind die dem Fachmann an sich bekannten Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

Das Merkmal, dass das Austrittsende des Wärmetauscherrohrs in das im Inneren des Mantelrohrs angeordnete Innenrohr einmündet, ist nicht einengend dahingehend zu verstehen, dass das Rohrende des Wärmetauscherrohrs in das Innenrohr eingeführt werden muss. Vielmehr können Wärmetauscherrohr und Innenrohr auch leicht beabstandet angeordnet werden. Wesentlich ist es, dass die aus dem Wärmetauscherrohr austretende Gasströmung im Wesentlichen vollständig in das Innenrohr einströmt und somit in dieses einmündet.

Der Erfindung liegt die Erkenntnis zugrunde, dass die Metal Dusting-Korrosion insbesondere des drucktragenden Mantelrohrs vermieden oder zumindest deutlich verringert werden kann, wenn beim Ausleiten des heißen Synthesegasprodukts aus der Reaktionskammer, dessen Temperatur in dem für die Metal Dusting-Korrosion relevanten Temperaturbereich liegt, dieses durch ein nicht drucktragendes Innenrohr geleitet wird, das mit einer Korrosionsschutzschicht ausgestattet ist oder aus einem korrosionsbeständigen Material besteht. Somit muss nur ein geringer Teil des Reformerrohres in aufwendiger Weise gegen die Metal Dusting-Korrosion geschützt werden, der zudem relativ leicht ausgetauscht werden kann. Der Austausch des Mantelrohres wäre dagegen weitaus aufwendiger.

Die Ausstattung der Austrittskammer mit einem nicht drucktragenden, korrosionsgeschützten Innenrohr wirkt vorteilhaft mit der Anordnung einer gasdurchlässigen thermischen Isolierschicht zwischen der Innenwand des drucktragenden Mantelrohrs und der Außenwand des Innenrohrs zusammen. Die gasdurchlässige Isolierschicht bewirkt, dass der statische Druck in der Austrittskammer auf das Mantelrohr übertragen werden kann, dieses aber vor Metal Dusting-Korrosion geschützt ist, da durch die thermische Isolierschicht die Oberflächentemperatur der Innenwand des Mantelrohrs unterhalb des für die Metal Dusting-Korrosion relevanten Temperaturbereichs liegt, so dass ein Kontakt der Innenwand des Mantelrohrs mit dem Synthesegasprodukt unkritisch ist.

Das korrosionsbeständig ausgerüstete Innenrohr schützt ferner die zwischen der Innenwand des Mantelrohrs und der Außenwand des Innenrohrs angeordnete, gasdurchlässige thermische Isolierschicht gegenüber Erosion bzw. Abrasion durch die sich einstellenden, hohen Gasgeschwindigkeiten in der Austrittskammer. Da die Isolierschicht aufgrund der gewünschten Gasdurchlässigkeit eine eher lockere Beschaffenheit bzw. Packungsdichte und eine damit verbundene geringe mechanische Stabilität aufweist, ist eine solche zusätzliche Schutzfunktion wichtig.

### Bevorzugte Ausgestaltungen der Erfindung

Bevorzugt wird bei dem erfindungsgemäßen Reformerrohr das Austrittsende des Wärmetauscherrohrs auf seiner 1 Innenseite und der durch den Trennboden durchgeführte Anteil auch auf seiner Außenseite mit einer Korrosionsschutzschicht ausgestattet. Auf diese Weise ist nicht nur die Austrittskammer, sondern auch der Anteil des Wärmetauscherrohrs gegen die Metal Dusting-Korrosion geschützt, der sich im kritischen Temperaturbereich befindet.

Bevorzugt wird ferner, dass das Innenrohr auf dem Trennboden aufsitzt, aber nicht gasdicht mit diesem verbunden ist. Auf diese Weise kann ein Druckausgleich bzw. eine Druckübertragung durch die gasdurchlässige thermische Isolierschicht hindurch auf die Innenwand des Mantelrohrs erfolgen. Der Kontakt der Innenwand des Mantelrohrs mit dem Synthesegasprodukt ist unkritisch, da sich deren Oberflächentemperatur aufgrund der Isolierung unterhalb des für die Metal Dusting-Korrosion relevanten Temperaturbereichs befindet. Da das Innenrohr somit nicht drucktragend ist, kann dieses auch aus weniger druckresistenten Materialien, beispielsweise keramischen Werkstoffen hergestellt werden.

Besonders bevorzugt wird es, dass das erfindungsgemäße Reformerrohr mit einem helixförmig gewendelten Wärmetauscherrohr ausgestattet ist und vorzugsweise zwei Wärmetauscherrohre vorhanden sind, die in Form einer Doppelhelix in der Katalysatorschüttung angeordnet sind. Diese Ausgestaltung des Reformerrohr stellt einen günstigen Kompromiss zwischen apparativem Aufwand und günstigen Wärmeübertragungseigenschaften dar.

Eine vorteilhafte Ausgestaltung des erfindungsgemäßen Reformerrohres sieht vor, dass der Innendurchmesser des mindestens einen Wärmetauscherrohrs so gewählt wird, dass sich, bezogen auf den Normalwert des Einsatzgasstroms, in der Austrittskammer ein Zieldruck einstellt, der kleiner ist als der Druck in der Reaktionskammer. Auf diese Weise wird das Potenzial für die Metal Dusting-Korrosion nochmals reduziert, da deren Gleichgewichtslage und Reaktionsgeschwindigkeit vom CO-Partialdruck und mithin - bei einem bestimmten CO-Gehalt im Synthesegasprodukt - vom Gesamtdruck beeinflusst wird. Ferner wird auf diese Weise der in der Sammelleitung gewünschte Druck eingestellt.

Die Erfindung umfasst auch einen Reformerofen, umfassend feuerfest ausgekleidete oder feuerfest zugestellte Wände, eine Decke und einen Boden und einen dadurch gebildeten Innenraum, dadurch gekennzeichnet, dass mindestens ein Reformerrohr gemäß Anspruch 1 bis 5 und mindestens ein Brenner zur Beheizung des Reformerrohrs in dem Innenraum oder in einem mit dem Innenraum bezüglich der Brennerrauchgase in Fluidverbindung stehenden Nebenraum angeordnet sind.

In besonderer Ausgestaltung des erfindungsgemäßen Reformerofens ist das mindestens eine Reformerrohr frei hängend oder frei stehend in dem Innenraum angeordnet, wobei der die Reaktionskammer umfassende Teil des Mantelrohrs im Innenraum angeordnet ist und der die Austrittskammer umfassende Teil des Mantelrohrs mindestens teilweise durch die Decke oder den Boden durchgeführt wird. Frei hängend oder frei stehend bedeutet in diesem Zusammenhang, dass nur das die Austrittskammer umfassende Ende des Reformerrohrs in mechanischem Kontakt mit der Decke oder dem Boden des Reformerofens steht.

Dies ist besonders günstig, da auf diese Weise thermisch-mechanische Spannungen zwischen dem Eintritt für den Einsatzgasstrom und dem Austritt für den Synthesegasproduktstrom vermieden werden, die aufgrund der beträchtlichen Temperaturunterschiede bei den aus dem Stand der Technik bekannten Reformerrohren entstehen. Bei letzteren werden daher aufwändige Maßnahmen, wie beispielsweise die Verwendung von Spannungskompensatoren (sog. Pigtails) oder von Seilzügen, eingesetzt, um die auftretenden Spannungen und deren negative Auswirkungen, beispielsweise eine Verformung des Reformerrohrs, zu kompensieren. Dies ist bei der frei hängenden oder frei stehenden Anordnung des Reformerrohrs nicht mehr notwendig.

In weiterer bevorzugter Ausgestaltung des erfindungsgemäßen Reformerofens sind eine Vielzahl von Reformerrohren und Brennern so in dem Innenraum angeordnet, dass die Längsachsen der durch die Brenner erzeugten Flammen parallel zu den Längsachsen der Reformerrohre ausgerichtet sind. Auf diese Weise kann sichergestellt werden, dass durch einen Brenner die um ihn angeordneten Reformerrohr gleichmäßig beheizt werden. Ferner wird den Reformerrohren durch die parallel verlaufenden Flammenachsen auf einer längeren Strecke Strahlungswärme zugeführt und eine lokale Überhitzung der Außenseiten der Reformerrohre vermieden.

Die Erfindung umfasst auch ein Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines den Einsatzstoff enthaltenden Einsatzgasstroms und Zugabe von Reformierungsdampf,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,
dadurch gekennzeichnet, dass das katalytische Umsetzen in Schritt (b) in einem Reformerrohr nach Anspruch 1 bis 5 erfolgt.

In besonderer Ausgestaltung des erfindungsgemäßen Verfahrens ist der Druck in der Austrittskammer kleiner ist als in der Reaktionskammer und er entspricht, bezogen auf den Normalwert des Einsatzgasstroms, einem zuvor festgelegten Zieldruck. Auf diese Weise wird das Potenzial für die Metal Dusting-Korrosion nochmals reduziert, da deren Gleichgewichtslage und Reaktionsgeschwindigkeit vom CO-Partialdruck und mithin - bei einem bestimmten CO-Gehalt im Synthesegasprodukt - vom Gesamtdruck beeinflusst wird. Ferner wird auf diese Weise der in der Sammelleitung gewünschte Druck eingestellt.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

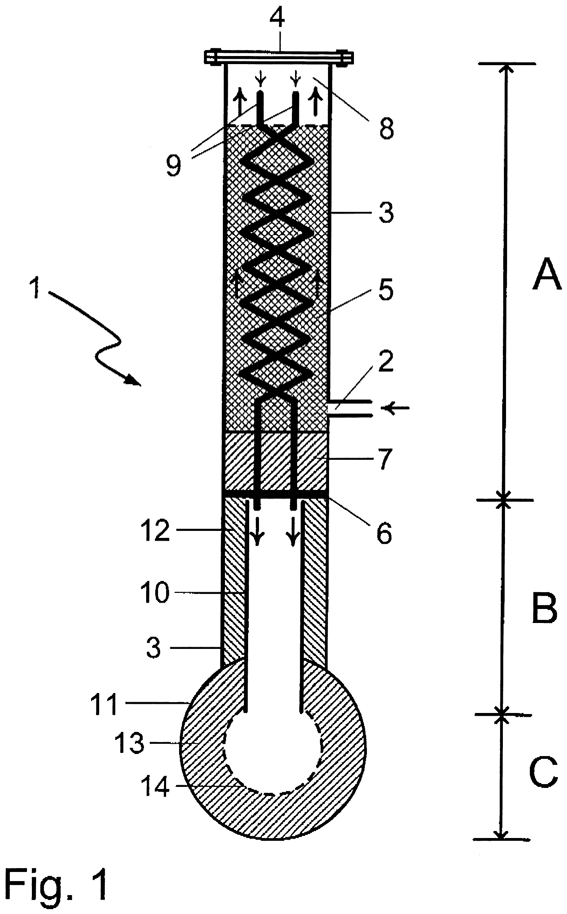

Es zeigt die einzige Figur
- Fig. 1: ein Reformerrohr gemäß einer bevorzugten Ausführungsform der Erfindung.

Das in Fig. 1 bildlich dargestellte, erfindungsgemäße Reformerrohr 1 ist in die Abschnitte A (Reaktionskammer), B (Austrittskammer) und C (Sammelleitung) unterteilt.

Über die Eintrittsleitung 2 tritt entschwefeltes Erdgas gemeinsam mit Reformierungsdampf in die im oberen Teil des Mantelrohrs 3 angeordnete Reaktionskammer A ein. Das Mantelrohr besteht aus einem Nickel-Chrom-Stahl, beispielsweise des Typs G-X45NiCrNbTi3525. Die Eintrittstemperatur des Einsatzgases beträgt 600 °C, die auf das Katalysatorvolumen bezogene Raumgeschwindigkeit beträgt typischerweise 4000 bis 5000 m_{N}³/(m³ h).

Im vorliegenden Ausführungsbeispiel ist das Reformerrohr senkrecht stehend mit dem offenen Rohrende des Mantelrohrs 3 in oberer Position angeordnet und wird von außen mittels Brennern beheizt (nicht dargestellt in Fig. 1). Das offene Rohrende des Mantelrohrs ist beim Betrieb des Reformerrohres mit einer Verschlussvorrichtung 4, beispielsweise einem aufgeflanschten Deckel, verschlossen, der für Revisionsvorgänge und zum Befüllen bzw. Entleeren des Katalysators geöffnet werden kann.

Das Erdgas und der Reformierungsdampf treten nach dem Eintritt in das Mantelrohr in die Katalysatorschüttung 5 ein, die aus Partikeln eines festen, nickelbasierten Reformierungskatalysators gebildet wird. Die Einsatzstoffe strömen sodann aufwärts durch das Katalysatorbett, wie es durch Strömungspfeile angedeutet ist. Die Katalysatorschüttung ist mittels des Trennbodens 6 in dem Mantelrohr fixiert. Zwischen Trennboden und Katalysatorschüttung befindet sich eine Schüttung aus Inertkörpern 7 als Auflage für den Katalysator.

An dem Reformierungskatalysator findet die endotherme Dampfreformierungsreaktion statt. Das teilumgesetzte Erdgas, das neben Kohlenoxiden und Wasserstoff auch noch nicht umgesetztes Methan enthält, tritt nach Verlassen der Katalysatorschüttung in einen Freiraum 8 ein, der an dem verschlossenen Rohrende 4 des Mantelrohres angeordnet ist. Anschließend tritt der teilumgesetzte Einsatzgasstrom in das Eintrittsende der innerhalb der Katalysatorschüttung angeordneten, gewendelten Wärmetauscherrohre 9 ein. Der durch die Wärmetauscherrohre 9 strömende Gasstrom gibt einen Teil seiner fühlbaren Wärme im Gegenstrom an die Katalysatorschüttung und den durch sie strömenden Einsatzgasstrom ab. Die Wärmetauscherrohre bestehen aus Werkstoffen mit guter Beständigkeit gegen die Metal Dusting-Korrosion wie z.B. Alloy 601, 602 CA, 617, 690, 692, 693, HR 160, HR 214, Kupfer enthaltende Legierungen oder sogenannte Mehrschichtmaterialien, bei denen die Rohre mit Zinn-Nickel- oder Aluminium-Nickel-Legierungen beschichtet sind. Alternativ oder zusätzlich sind die Austrittsenden der Wärmetauscherrohre auf ihren Innenseiten und an den durch den Trennboden durchgeführten Anteilen auch auf den Außenseiten mit einer Korrosionsschutzschicht ausgestattet. Im vorliegenden Beispiel ist dies eine Aluminium-Diffusionsschicht.

Nach Durchströmen der Wärmetauscherrohre tritt der Synthesegasproduktstrom in die Austrittskammer B ein. Dazu werden die Austrittsenden beider Wärmetauscherrohre 9 durch den Trennboden 6 durchgeführt und auf diese Weise fixiert. Sie münden dann austrittsseitig in das Innenrohr 10 ein, das die Verbindung zwischen den Wärmetauscherrohren 9 und der Sammelleitung 11 darstellt. Das Innenrohr ist ebenfalls aus einem der oben genannten, metallischen Werkstoffe gefertigt und seine Innenwand und bevorzugt auch seine Außenwand mit einer Aluminium-Diffusionsschicht als Korrosionsschutzschicht ausgestattet. Alternativ kann auch ein aus einem keramischen Werkstoff hergestelltes Innenrohr verwendet werden.

Das Innenrohr 10 ist mittels bildlich nicht dargestellter Befestigungen in seiner Position zwischen der Unterseite des Trennbodens 6 und der Sammelleitung 11 fixiert. Es besteht dabei keine feste, gasdichte Verbindung zwischen Innenrohr und der Unterseite des Trennbodens, sondern das Innenrohr ist zu letzterem beabstandet oder sitzt lediglich Stoß an Stoß auf der Unterseite des Trennbodens auf. Auf diese Weise kann ein Ausgleich bzw. eine Übertragung des statischen Drucks durch die gasdurchlässige thermische Isolierschicht 12 hindurch auf die Innenwand des Mantelrohrs 3 erfolgen. Der Kontakt der Innenwand des Mantelrohrs mit dem ruhenden oder nur schwach strömenden Synthesegasprodukt ist unkritisch, da sich deren Oberflächentemperatur aufgrund der Isolierung unterhalb des für die Metal Dusting-Korrosion relevanten Temperaturbereichs befindet. Da das Innenrohr somit nicht drucktragend ist, kann dieses auch aus weniger druckresistenten Materialien, beispielsweise keramischen Werkstoffen hergestellt werden.

Zwischen der Außenwand des Innenrohrs und der Innenwand des Mantelrohrs ist ein gasdurchlässiges Isoliermaterial 12 angebracht. Hierfür können faserbasierte Isoliermaterialien, aber auch in sich formstabile keramische Formkörper verwendet werden. Letztere sind besonders vorteilhaft, da sie besonders einfach montiert und demontiert werden können. Aufgrund ihrer Formstabilität können sie bei der Montage einfach in den Ringraum zwischen Mantelrohr und Innenrohr hineingestellt werden, ohne dass es besonderer Befestigungsmittel bedarf.

Auch austrittsseitig ist das Innenrohr 10 nicht fest bzw. nicht gasdicht mit der Sammelleitung 11 verbunden, sondern lediglich in letztere hineingeführt oder hineingesteckt. Neben den oben erörterten Vorteilen kann das Innenrohr auf diese Weise bei einer Anlagenrevision besonders leicht ausgetauscht werden. Ferner werden Druck- oder Zugspannungen vermieden, die beim Betrieb des Reformerrohrs aufgrund unterschiedlicher thermischer Ausdehnungskoeffizienten der für Mantelrohr und Innenrohr verwendeten Materialien auftreten können.

Die Sammelleitung 11 ist auf ihrer Innenseite mit Isoliermaterial 13 und/oder einer korrosionsresistenten, beispielsweise keramischen Beschichtung 14 versehen, die eine erhöhte Beständigkeit gegen die Metal Dusting-Korrosion aufweisen. Über die Sammelleitung wird der Synthesegasproduktstrom aus dem Reformerrohr 1 ausgeleitet und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

### Gewerbliche Anwendbarkeit

Mit der Erfindung wird ein Reformerrohr vorgeschlagen, das einen internen Wärmeaustausch zwischen dem Einsatzgas und dem zu Synthesegasprodukten teilumgesetzten Produktgas ermöglicht, wodurch sich Vorteile hinsichtlich des Energieverbrauchs bei der Verwendung des Reformerrohres ergeben. Durch die erfindungsgemäße Ausgestaltung des Reformerrohres insbesondere im Bereich der Austrittskammer wird es ermöglicht, der Metal Dusting-Korrosion wirkungsvoll gegenzusteuern.

### Bezugszeichenliste

- [1]: Reformerrohr
- [2]: Eintrittsleitung
- [3]-: Mantelrohr
- [4]: Verschlussvorrichtung
- [5]: Katalysatorschüttung
- [6]: Trennboden
- [7]: Schüttung aus Inertkörpern
- [8]: Freiraum
- [9]: Wärmetauscherrohre
- [10]: Innenrohr
- [11]: Sammelleitung
- [12]: Isolierschicht
- [13]: Isolierschicht
- [14]: Beschichtung

- [A]: Reaktionskammer
- [B]: Austrittskammer
- [C]: Sammelleitung

## Patentansprüche

1. Reformerrohr zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen, umfassend
(a) ein äußeres, drucktragendes Mantelrohr, wobei das Mantelrohr mittels eines Trennbodens in eine Reaktionskammer und eine Austrittskammer unterteilt wird, so dass in der Austrittskammer ein anderer, vorzugsweise geringerer, Druck als in der Reaktionskammer einstellbar ist und wobei die Reaktionskammer von außen beheizt wird,
(b) eine in der Reaktionskammer angeordnete Schüttung eines für die Dampfreformierung aktiven, festen Katalysators,
(b) einen im Bereich der Reaktionskammer angeordneten Eintritt für den den Einsatzstoff enthaltenden Einsatzgasstrom, wobei der Eintritt des Einsatzgasstroms in Fluidverbindung mit der Katalysatorschüttung steht,
(c) mindestens ein helixförmig gewendeltes, innerhalb der Reaktionskammer und innerhalb der Katalysatorschüttung angeordnetes Wärmetauscherrohr, dessen Eintrittsende in Fluidverbindung mit der Katalysatorschüttung steht und dessen Austrittsende in Fluidverbindung mit der Austrittskammer steht, wobei der Einsatzgasstrom nach Eintritt in die Reaktionskammer zunächst die Katalysatorschüttung und nachfolgend im Gegenstrom das Wärmetauscherrohr durchströmt und wobei das Wärmetauscherrohr in einer Wärmeaustauschbeziehung mit der Katalysatorschüttung und dem durch sie strömenden Einsatzgasstrom steht,
(d) eine Sammelleitung für das Synthesegasprodukt, die mit der Austrittskammer in Fluidverbindung steht, **dadurch gekennzeichnet, dass** im Bereich der Austrittskammer
(e) das Austrittsende des Wärmetauscherrohrs durch den Trennboden durchgeführt wird und in ein im Inneren des Mantelrohrs angeordnetes Innenrohr einmündet, das in Fluidverbindung mit der Sammelleitung steht, so dass das Synthesegasprodukt von der Reaktionskammer über die Austrittskammer in die Sammelleitung gelangen kann,
(f) das Innenrohr mit einer Korrosionsschutzschicht ausgestattet ist oder aus einem korrosionsbeständigen Material besteht,
(g) zwischen der Innenwand des Mantelrohrs und der Außenwand des Innenrohrs eine gasdurchlässige thermische Isolierschicht angeordnet ist.

2. Reformerrohr nach Anspruch 1, **dadurch gekennzeichnet, dass** das Austrittsende des Wärmetauscherrohrs auf seiner Innenseite und der durch den Trennboden durchgeführte Anteil auch auf seiner Außenseite mit einer Korrosionsschutzschicht ausgestattet ist.

3. Reformerrohr nach Anspruch 1 oder 2, **dadurch gekennzeichnet, dass** das Innenrohr auf dem Trennboden aufsitzt, aber nicht gasdicht mit diesem verbunden ist.

4. Reformerrohr gemäß eines der vorigen Ansprüche, **dadurch gekennzeichnet, dass** das Wärmetauscherrohr helixförmig gewendelt ist und vorzugsweise zwei Wärmetauscherrohre vorhanden sind.

5. Reformerrohr gemäß eines der vorigen Ansprüche, **dadurch gekennzeichnet, dass** der Innendurchmesser des mindestens einen Wärmetauscherrohrs so gewählt wird, dass sich, bezogen auf den Normalwert des Einsatzgasstroms, in der Austrittskammer ein Zieldruck einstellt, der kleiner ist als der Druck in der Reaktionskammer.

6. Reformerofen, umfassend feuerfest ausgekleidete oder feuerfest zugestellte Wände, eine Decke und einen Boden und einen dadurch gebildeten Innenraum, **dadurch gekennzeichnet, dass** mindestens ein Reformerrohr gemäß Anspruch 1 bis 5 und mindestens ein Brenner zur Beheizung des Reformerrohrs in dem Innenraum oder in einem mit dem Innenraum bezüglich der Brennerrauchgase in Fluidverbindung stehenden Nebenraum angeordnet sind.

7. Reformerofen gemäß Anspruch 6, **dadurch gekennzeichnet, dass** das dass mindestens eine Reformerrohr hängend oder stehend in dem Innenraum angeordnet ist, wobei der die Reaktionskammer umfassende Teil des Mantelrohrs im Innenraum angeordnet ist und der die Austrittskammer umfassende Teil des Mantelrohrs mindestens teilweise durch die Decke oder den Boden durchgeführt wird.

8. Reformerofen gemäß eines der vorigen Ansprüche, **dadurch gekennzeichnet, dass** eine Vielzahl von Reformerrohren und Brennern in dem Innenraum angeordnet sind und dass die Längsachsen der durch die Brenner erzeugten Flammen parallel zu den Längsachsen der Reformerrohre ausgerichtet sind.

9. Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines den Einsatzstoff enthaltenden Einsatzgasstroms und Zugabe von Reformierungsdampf,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,
**dadurch gekennzeichnet, dass** das katalytische Umsetzen in Schritt (b) in einem Reformerrohr nach Anspruch 1 bis 5 erfolgt.

10. Verfahren nach Anspruch 9, **dadurch gekennzeichnet, dass** der Druck in der Austrittskammer kleiner ist als in der Reaktionskammer und er, bezogen auf den Normalwert des Einsatzgasstroms, einem zuvor festgelegten Zieldruck entspricht.

## Claims

1. Reformer tube for converting hydrocarbon-containing input materials, preferably natural gas, into a synthesis gas product comprising carbon oxides and hydrogen under steam reforming conditions, comprising
(a) an outer, pressurized shell tube, wherein the shell tube is divided into a reaction chamber and an exit chamber by means of a separating tray, so that it is possible to set a different, preferably lower, pressure in the exit chamber than in the reaction chamber, and wherein the reaction chamber is externally heated,
(b) a dumped bed of a steam-reforming-active solid catalyst arranged in the reaction chamber,
(c) an entry for the input gas stream comprising the input material, arranged in the region of the reaction chamber, wherein the entry for the input gas stream is in fluid connection with the dumped catalyst bed,
(d) at least one helically coiled heat exchanger tube arranged inside the reaction chamber and inside the dumped catalyst bed, whose entry end is in fluid connection with the dumped catalyst bed and whose exit end is in fluid connection with the exit chamber, wherein the input gas stream after entry into the reaction chamber initially flows through the dumped catalyst bed and subsequently flows through the heat exchanger tube in countercurrent, and wherein the heat exchanger tube is in a heat exchange relationship with the dumped catalyst bed and the input gas stream flowing therethrough,
(e) a collection conduit for the synthesis gas product, which is in fluid connection with the exit chamber, **characterized in that**, in the region of the exit chamber,
(f) the exit end of the heat exchanger tube is fed through the separating tray and opens into an inner tube which is arranged in the interior of the shell tube and is in fluid connection with the collection conduit, so that the synthesis gas product is able to pass from the reaction chamber via the exit chamber into the collection conduit,
(g) the inner tube is equipped with a corrosion protection layer or consists of a corrosion-resistant material,
(h) a gas-permeable thermal insulation layer is disposed between the inner wall of the shell tube and the outer wall of the inner tube.

2. Reformer tube according to Claim 1, **characterized in that** the exit end of the heat exchanger tube is furnished on its inside, and the portion fed through the separating tray on its outside as well, with a corrosion protection layer.

3. Reformer tube according to Claim 1 or 2, **characterized in that** the inner tube is seated on the separating tray but is not in gastight communication therewith.

4. Reformer tube according to any of the preceding claims, **characterized in that** the heat exchanger tube is helically coiled and there are preferably two heat exchanger tubes present.

5. Reformer tube according to any of the preceding claims, **characterized in that** the internal diameter of the at least one heat exchanger tube is selected such that in the exit chamber, relative to the normal value of the input gas stream, a target pressure is established which is lower than the pressure in the reaction chamber.

6. Reformer furnace comprising refractorily lined or refractorily faced walls, a ceiling and a floor and an interior formed thereby, **characterized in that** at least one reformer tube according to Claims 1 to 5 and at least one burner for heating the reformer tube are arranged in the interior or in a secondary space in fluid connection with the interior in respect of the burner flue gases.

7. Reformer furnace according to Claim 6, **characterized in that** the at least one reformer tube is arranged in the interior in hanging or standing fashion, wherein the portion of the shell tube comprising the reaction chamber is arranged in the interior and the portion of the shell tube comprising the exit chamber is at least partially fed through the ceiling or the floor.

8. Reformer furnace according to any of the preceding claims, **characterized in that** a multiplicity of reformer tubes and burners are arranged in the interior, and **in that** the longitudinal axes of the flames generated by the burners are oriented parallel to the longitudinal axes of the reformer tubes.

9. Process for producing synthesis gas by catalytic steam reforming of hydrocarbon-containing input materials, preferably natural gas, under steam reforming conditions in the presence of a steam-reforming-active solid catalyst, comprising the steps of:
(a) provision of an input gas stream comprising the input material and addition of reforming steam,
(b) catalytic conversion of the input material under steam reforming conditions into a synthesis gas product comprising carbon oxides and hydrogen,
(c) discharging and optional workup of the synthesis gas product,
**characterized in that** the catalytic conversion in step (b) is effected in a reformer tube according to Claims 1 to 5.

10. Process according to Claim 9, **characterized in that** the pressure in the exit chamber is lower than in the reaction chamber and corresponds, relative to the normal value of the input gas stream, to a target pressure specified beforehand.

## Revendications

1. Tube de reformage pour transformer dans des conditions de reformage à la vapeur des matériaux d'entrée contenant des hydrocarbures, de préférence du gaz naturel, en un produit gazeux de synthèse comprenant des oxydes de carbone et de l'hydrogène, comprenant :
(a) un tube enveloppe extérieur sous pression,
dans lequel le tube enveloppe est divisé en une chambre de réaction et une chambre de sortie au moyen d'un plateau de séparation, si bien qu'il est possible de régler dans la chambre de sortie une pression différente, de préférence inférieure, de celle dans la chambre de réaction, et
dans lequel la chambre de réaction est chauffée de l'extérieur ;
(b) un lit déversé de catalyseur solide actif en reformage à la vapeur disposé dans la chambre de réaction ;
(c) une entrée pour le flux gazeux entrant comprenant le matériau d'entrée, disposée dans la zone de la chambre de réaction,
dans lequel l'entrée pour le flux gazeux entrant est en communication fluidique avec le lit déversé de catalyseur ;
(d) au moins un tube échangeur de chaleur enroulé en hélice qui est disposé à l'intérieur de la chambre de réaction et à l'intérieur du lit déversé de catalyseur, dont l'extrémité d'entrée est en communication fluidique avec le lit déversé de catalyseur et dont l'extrémité de sortie est en communication fluidique avec la chambre de sortie,
dans lequel le flux gazeux entrant, après être entré dans la chambre de réaction, circule initialement à travers le lit déversé de catalyseur et par la suite circule à contre-courant à travers le tube échangeur de chaleur, et
dans lequel le tube échangeur de chaleur est en relation d'échange thermique avec le lit déversé de catalyseur et le flux gazeux entrant qui le traverse ;
(e) un conduit collecteur pour le produit gazeux de synthèse, qui est en communication fluidique avec la chambre de sortie,
**caractérisé en ce que**, dans la zone de la chambre de sortie :
(f) l'extrémité de sortie du tube échangeur de chaleur est alimentée à travers le plateau séparateur et débouche dans un tube intérieur qui est disposé à l'intérieur du tube enveloppe et est en communication fluidique avec le conduit collecteur, de sorte que le produit gazeux de synthèse est capable de passer de la chambre de réaction dans le conduit collecteur via la chambre de sortie ;
(g) le tube intérieur est pourvu d'une couche de protection contre la corrosion ou est constitué d'un matériau résistant à la corrosion ;
(h) une couche d'isolation thermique perméable aux gaz est disposée entre la paroi intérieure du tube enveloppe et la paroi extérieure du tube intérieur.

2. Tube de reformage selon la revendication 1, **caractérisé en ce que** l'extrémité de sortie du tube échangeur de chaleur est pourvue sur son intérieur d'une couche de protection contre la corrosion et la partie introduite à travers le plateau séparateur l'est également sur son extérieur.

3. Tube de reformage selon la revendication 1 ou 2, **caractérisé en ce que** le tube intérieur a pour siège le plateau de séparation mais n'est pas en communication étanche avec lui.

4. Tube de reformage selon l'une quelconque des revendications précédentes, **caractérisé en ce que** le tube échangeur de chaleur est enroulé en hélice et on, trouve de préférence deux tubes échangeurs de chaleur.

5. Tube de reformage selon l'une quelconque des revendications précédentes, **caractérisé en ce que** le diamètre interne dudit tube échangeur de chaleur est choisi de telle sorte qu'il s'établisse dans la chambre de sortie, par rapport à la valeur normale du flux gazeux entrant, une pression cible qui est inférieure à la pression dans la chambre de réaction.

6. Four de reformage comprenant des parois revêtues intérieurement ou extérieurement de matière réfractaire, un plafond et une sole et un intérieur constitué par eux, **caractérisé en ce que** au moins un tube de reformage selon les revendications 1 à 5 et au moins un brûleur pour chauffer le tube de reformage sont disposés dans l'intérieur ou dans un espace secondaire en communication fluidique avec l'intérieur en ce qui concerne les gaz de combustion du brûleur.

7. Four de reformage selon la revendication 6, **caractérisé en ce que** ledit tube de reformage est disposé dans l'intérieur en suspension ou posé sur la sole, dans lequel la partie du tube enveloppe comprenant la chambre de réaction est disposée dans l'intérieur et la partie du tube enveloppe comprenant la chambre de sortie est au moins en partie introduite à travers le plafond ou la sole.

8. Four de reformage selon l'une quelconque des revendications précédentes, **caractérisé en ce qu'**une pluralité de tubes de reformage et de brûleurs sont disposés dans l'intérieur, et
**en ce que** les axes longitudinaux des flammes produites par les brûleurs sont orientés parallèlement aux axes longitudinaux des tubes de reformage.

9. Processus de production de gaz de synthèse par reformage à la vapeur de matériaux d'entrée contenant des hydrocarbures, de préférence du gaz naturel, dans des conditions de reformage à la vapeur en présence d'un catalyseur solide actif en reformage à la vapeur, comprenant les étapes consistant à :
(a) produire un flux gazeux entrant comprenant le matériau d'entrée et ajouter de la vapeur de reformage,
(b) effectuer dans des conditions de reformage à la vapeur la conversion catalytique du matériau d'entrée en un produit gazeux de synthèse comprenant des oxydes de carbone et de l'hydrogène,
(c) évacuer le produit gazeux de synthèse et le soumettre éventuellement à un traitement conclusif,
**caractérisé en ce que** la conversion catalytique à l'étape (b) est effectuée dans un tube de reformage selon les revendications 1 à 5.

10. Processus selon la revendication 9, **caractérisé en ce que** la pression dans la chambre de sortie est inférieure à celle dans la chambre de réaction et correspond, par rapport à la valeur normale du flux gazeux entrant, à une pression cible précisée au préalable.
